# EUROPÄISCHE PATENTANMELDUNG

(11) **EP 4 160 078 A1**
(43) Veröffentlichungstag der Anmeldung: **05.04.2023**
(21) Anmeldenummer: 22198993.2
(22) Anmeldetag: 30.09.2022
(51) Int. Cl.: F17C 5/06, C22C 1/08, B22D 25/00, F28D 7/10, F28F 13/00, F28F 13/08

(54) **WÄRMETAUSCHER UND VERFAHREN ZUM BETANKEN EINES FAHRZEUGES**

(30) Priorität: 04.10.2021 DE 102021125688
(71) Anmelder: Schmöle GmbH, 58730 Fröndenberg (DE)
(72) Erfinder: Neumann, Till, 58640 Iserlohn (DE); Harder, Alexander, 42111 Wuppertal (DE)
(74) Vertreter: Roche, von Westernhagen & Ehresmann

(57) **Zusammenfassung**

Die Erfindung betrifft einen Wärmetauscher (10, 10', 10"), umfassend ein Wärmetauscherrohr (20, 20') zum Leiten eines ersten Mediums in seinem Inneren, sowie mindestens einen Anschluss (23) für ein zweites Medium, dadurch gekennzeichnet, dass der Bereich um das Wärmetauscherrohr (20, 20') von einem, insbesondere festen, offenporigen Material (22), vorzugsweise einem Körper aus einem solchen Material (22), bereitgestellt wird, in welches das zweite Medium insbesondere eintreten kann.

## Beschreibung

Die Erfindung betrifft gemäß einem ersten Aspekt einen Wärmetauscher.

Wärmetauscher sind aus zahlreichen Feldern der Technik hinreichend bekannt.

Insbesondere werden diese auch beim Betanken von Fahrzeugen mit Wasserstoff eingesetzt.

Hierbei verhält es sich nämlich so, dass Wasserstoff, der über ein Zapfventil bzw. eine Zapfpistole in den Tank eines Fahrzeuges eingeleitet werden kann, heruntergekühlt werden muss. Dies liegt darin begründet, dass bei dem Einleitprozess aus der Zapfsäule in den Tank des Fahrzeuges typischerweise eine unerwünschte, kompressionsbedingte Erwärmung des Wasserstoffes erfolgt, welche durch die Maßnahme des vorherigen Herunterkühlens egalisiert werden soll.

Im Stand der Technik sind dazu mindestens zwei unterschiedliche Lösungen bekannt: Gemäß einer ersten Ausführungsform befindet sich im Bereich einer Wasserstofftankstelle unterirdisch ein sehr großer Aluminiumblock von einigen Metern Durchmesser zur Kältespeicherung.

Da ein solcher Aluminiumblock einen sehr großen baulichen Aufwand mit sich bringt, bestehen Alternativen, bei welchen der Wärmetauscher in die Zapfsäule integriert ist. Hierbei handelt es sich dann typischerweise um sogenannte Plattenwärmetauscher, durch welche der Wasserstoff hindurchgeleitet wird, wobei er alternierend jede zweite, zwischen den Platten ausgebildete Kammer durchströmt. In Gegenstromrichtung, die jeweils anderen Kammern durchlaufend, wird ein Kältemittel durch den Plattenwärmetauscher geleitet.

Allerdings sind die Kosten für dessen Herstellung doch als extrem hoch anzusehen, insbesondere da der Plattenwärmetauscher zur Erzielung einer hinreichenden Dichtigkeit unter Vakuumbedingungen bei sehr hohen Temperaturen und Drücken über einen sehr langen Zeitraum hergestellt werden muss.

Aufgabe der vorliegenden Erfindung ist es daher, eine Lösung bereitzustellen, welche wirtschaftlicher ist und dabei immer noch derart gute Wärmetauscheigenschaften aufweist, dass sie selbst zum Kühlen von Wasserstoff (oder anderen Fluiden) geeignet ist.

Die Erfindung löst die gestellte Aufgabe mit den Merkmalen des Hauptanspruches und ist demnach dadurch gekennzeichnet, dass der Bereich um ein Wärmetauscherrohr für ein erstes Medium von einem, insbesondere festen, offenporigen Material, vorzugsweise einem Körper aus einem solchen Material, bereitgestellt wird (in welches Material das zweite Medium insbesondere eintreten kann).

Erfindungsgemäß ist also vorgesehen, den Bereich (unmittelbar) um das Wärmetauscherrohr herum mit einem offenporigen Material aufzufüllen.

Mit anderen Worten besteht die Idee der Erfindung darin, das Wärmetauscherrohr in permeables Material einzubetten, welches insbesondere von einem zweiten Medium durchströmt werden kann.

Auf diese Weise können die Wärmetauscheigenschaften des erfindungsgemäßen Wärmetauschers verbessert werden. Insbesondere stellt das offenporige Material, im Gegensatz zu dem an sich flüchtigen zweiten Medium, einen Kältespeicher (oder Wärmespeicher) bereit, welcher das Wärmetauscherrohr besonders effektiv und/oder langanhaltend kühlen (oder wärmen) kann.

Bei dem zweiten Medium handelt es sich insbesondere um ein Kältemittel oder um ein Kühlmittel.

Das zweite Medium kann, aufgrund der Offenporigkeit des Materials, in das Material eintreten bzw. dieses durchströmen. Bei einem geschlossen-porigen Material wäre dies hingegen nicht möglich.

Demnach versteht man unter einem offenporigen Material im Sinne der Erfindung ein Material, welches zahlreiche, jedenfalls zum Teil verbundene Poren aufweist, in die das zweite Medium insbesondere eintreten kann.

Aufgrund der Offenporigkeit (im Gegensatz zu einer geschlossen-porigen Ausbildung) sind die Poren zu einem Großteil nicht voneinander isoliert, sondern mit anderen Poren und/oder der Außenseite verbunden.

Diese Ausgestaltung ermöglicht ein nahezu vollständiges Durchströmen des Bereiches um das Wärmetauscherrohr mit dem zweiten Medium, obwohl dieser Bereich von einem eigentlich festen Material ausgefüllt ist.

Das Material ist daher insbesondere porös. Eine Porosität ist allerdings nicht ausreichend (da diese auch bei geschlossen-porigem Material gegeben sein kann). Vielmehr ist das Material demnach auch als permeabel zu bezeichnen.

Die Poren können dabei unterschiedliche Formen aufweisen, beispielsweise ansatzweise kugelartige Poren (beispielsweise bei einem schaumartigen Material) oder auch Poren nach Art von schmalen Rippen, Rissen oder Plättchen oder ähnlichem. Entscheidend ist, dass die Poren im Wesentlichen offen sind und somit eine Durchfließbarkeit des Materials gegeben ist.

Das offenporige Material umgibt zumindest den aktiven Bereich des Wärmetauscherrohres, vorzugsweise vollständig.

Das heißt insbesondere, dass das offenporige Material unmittelbar an der Außenseite des Wärmetauscherrohres (gegebenenfalls an dessen Rippen) anliegt.

Typischerweise befindet sich das Wärmetauscherrohr in einem (festen) Körper aus einem solchen offenporigen Material.

Das Wärmetauscherrohr ist mit anderen Worten in einen derartigen Körper eingeschlossen oder wird von einem solchen ummantelt.

Bei dem Material handelt es sich typischerweise um ein festes Material, also um einen Feststoff (beispielsweise nicht um einen Körper, welcher eine (niedrige) Viskosität aufweist). Erst eine feste Ausbildung des Körpers ermöglicht eine hinreichende Speicherung der von dem zweiten Medium zugeführten Kälte/Wärme.

Typischerweise bringt das zweite Medium Kälte in das Material bzw. in den Körper ein.

Von der Erfindung sind aber auch Anwendungen nicht ausgeschlossen, bei welchen das zweite Medium Wärme in den Körper einbringen soll, um das, durch das Wärmetauscherrohr geführte, erste Medium zu erhitzen.

Zu derartigen Beispielen gehört die Wärmerückgewinnung aus Abgas. Bei dem ersten Medium kann es sich zum Beispiel um Wasser handeln, bei dem zweiten Medium um ein Abgas. In einem solchen Fall kann das Abgas als zweites Medium in das offenporige Material eingeleitet werden und das offenporige Material gibt die Wärme an das erste Medium (Wasser) im Wärmetauscherrohr ab. Vorzugsweise wird das in dem Wärmetauscher geführte erste Medium aber gekühlt.

Bei dem ersten Medium handelt es sich insbesondere um ein Fluid (also ein Gas oder eine Flüssigkeit). Es kann sich vorzugsweise um Wasserstoff handeln, welcher insbesondere in dem Wärmetauscher gekühlt werden soll.

Das zweite Medium stellt vorzugsweise ein Kühlmittel oder Kältemittel dar, beispielsweise ein Wasserglykolgemisch, CO2-Gas oder ähnliches.

Das zweite Medium kann das offenporige Material oder den Körper des offenporigen Materials dabei durchströmen, insbesondere quer oder entgegengesetzt oder gleichgerichtet zur Hauptleitrichtung des ersten Mediums.

Das offenporige Material ist insbesondere in dem Sinne fest, dass es in einem fertiggestellten und einsatzfähigen Wärmetauscher fest sein soll.

Bei der Herstellung des Wärmetauschers kann das Material hingegen noch in einem viskosen oder weichen, mithin nicht-festen, Zustand vorliegen.

Insbesondere muss das Material während der Herstellung des Wärmetauschers auch noch gar nicht offenporig (sondern kann beispielsweise geschlossen-porig) sein. So könnte ein nicht-fester, geschlossen-poriger Schaum in den Bereich um das Wärmetauscherrohr eingebracht werden, wobei das Material anschließend aushärtet, trocknet oder ähnliches, wodurch es einen im Wesentlichen festen Zustand erreicht. Dieser könnte insbesondere immer noch geschlossen-porig ausgebildet sein. Diesbezüglich bestehen aber Möglichkeiten, vor oder bei dem Einbringen des Materials in den Bereich um das Wärmetauscherrohr Partikel in dem (noch nicht festen) Material/Schaum vorzusehen.

Diese können bei oder nach Erhärten des Materials dann entfernt werden (beispielsweise ausgewaschen werden oder ähnliches).

Bei derartigen Partikeln kann es sich beispielsweise um Salzkristalle handeln.

Aufgrund dieser Partikel erhält das Material abschließend seine Offenporigkeit, bricht also die geschlossene Porenstruktur des Materials/Schaums auf. Andererseits kann natürlich von vornherein offenporiges Material in den Bereich um das Wärmetauscherrohr eingebracht werden. Besonders bevorzug ist aber eine Ausgestaltung, bei der die Partikel die Hauptporen definieren, und kleinere Poren, welche die Großen verbinden, bei einem Gussvorgang entstehen.

Um den geschaffenen Wärmetauscher auf seine spätere Anwendung einstellen zu können, sollte die Porosität und/oder Permeabilität beim Herstellungsprozess einstellbar sein. Lediglich beispielsweise kann dies durch die Menge oder Art der Partikel geregelt sein oder durch die Art des verwendeten Ausgangsmaterials (beispielsweise Schaum).

Als besonders vorteilhaft hat sich eine Herstellungsart herausgebildet, bei welcher das Wärmetauscherrohr zunächst in eine Form (nach Art einer Kokille) eingebracht wird.

Insbesondere kann es sich bei dem Material um ein Metall oder eine Legierung handeln.

Typischerweise wird das Material in eine Kokille (druck-)gegossen.

Das Material kann dabei beispielsweise als Schmelze vorliegen und/oder es können sich Partikel in dem Material oder der Kokille befinden, welche später entfernbar sind (zur Ausbildung der offenen Poren).

Bei den in das Material einbringbaren Partikeln kann es sich um Kristalle und/oder pulvrige Stoffe und/oder plastische und/oder flüssige Stoffe oder ähnliches handeln, welche entfernbar sind. Diese können gleiche oder unterschiedliche Größen auf Mikro- und/oder Makro-Ebene aufweisen.

Entscheidend im Sinne der Erfindung ist schließlich, dass es sich um Partikel handelt, welche bei dem Zielmaterial eine Offenporigkeit definieren.

Als Ausgangsmaterial hat sich ein Metallmaterial als besonders geeignet herausgestellt. Insbesondere kann es sich um Aluminium oder Aluminiumlegierungen handeln.

In diesem Sinne kann es sich bei dem Herstellungsverfahren für das offenporige Material bzw. den offenporigen Materialkörper um ein offenporiges Aluminium-Kokillenguss-Verfahren handeln.

Andererseits kann natürlich auch ein Metall-Schaum in den Bereich um das Wärmetauscherrohr eingebracht werden, insbesondere ein Aluschaum. Auch hierbei ist entscheidend, dass dieser in seinem Endzustand offenporig ist, was bei Aluschäumen beispielsweise durch das Hinzufügen von Salzkristallen oder Granulat erreicht werden kann, die dann nach dem Einschäumprozess herausgeschwemmt werden können.

Grundsätzlich können aber auch alle anderen offenporigen Materialien verwendet werden, insbesondere multifunktionale und/oder mikrostrukturierte und/oder mikroporöse und/oder aktivierte und/oder gradierte Materialien, insbesondere (Mikro-)Verbundwerkstoffe.

Vorzugsweise handelt es sich bei dem Material um ein im Grundzustand nicht offen-poriges Material (beispielsweise ist Aluminium in seinem Grundzustand nicht offenporig).

Das Material ist vorzugsweise verarbeitet und/oder nicht-geologisch (hiermit sind beispielsweise Erdschichten oder Gesteine von dieser vorteilhaften Ausführungsform nicht umfasst).

Das Material des Wärmetauschers wird typischerweise in eine Form oder Kammer eingegeben, in welcher sich das Wärmetauscherrohr befindet, jedenfalls der aktive Teil des Wärmetauscherrohres.

Bei der Form oder Kammer kann es sich um das spätere Gehäuse des Wärmetauschers handeln, so dass dieses beispielsweise mit Anschlüssen für das erste und zweite Medium versehen werden kann oder versehen sein kann.

Alternativ könnte auch vorgesehen sein, dass besagte Kammer oder Form anschließend entfernt wird und das Wärmetauscherrohr samt darum befindlichem, offenporigen Material in eine gänzlich andere Kammer oder ein anderes Gehäuse eingebracht wird, welches das Gehäuse des späteren Wärmetauschers ausbildet.

Schließlich ist es auch vorstellbar, dass das Wärmetauscherrohr samt darum angeordnetem, offenporigen Material gar nicht in eine Kammer eingegeben wird, sondern durch eine Beschichtung des offenporigen Materials an der Außenseite ein Austreten des (das offenporige Material durchströmenden) zweiten Mediums verhindert werden kann.

Bei dem Wärmetauscherrohr kann es sich um ein herkömmliches, aus dem Bereich der Wärmetauschertechnik bekanntes Wärmetauscherrohr handeln. Es kann insbesondere von einem Glattrohr bereitgestellt werden oder von einem berippten Rohr (also einem Rippenrohr, wobei die Rippen vorzugsweise (mit Hilfe eines Lasers) verschweißt sind).

Das Rohr kann in einer gestreckten, im Wesentlichen geraden Form vorliegen oder einer davon abweichenden Form, typischerweise in einer Wendelform. Auch die Form eines Flächenwärmetauschers, also ein Wärmetauscherrohr in Form eines Mäanders oder einer Harfenform, ist grundsätzlich von der Erfindung umfasst.

Schließlich sind auch Ausführungen von der Erfindung umfasst, in welchen das Wärmetauscherrohr von einem Koaxialrohr bereitgestellt wird.

Gemein ist allen Rohrausführungen jedoch, dass das Rohr an seiner Außenseite von einem offenporigen Material umgeben ist.

Insbesondere für den Fall, dass das Wärmetauscherrohr in einer Wendelform vorliegt, kann vorgesehen sein, dass die Gesamtwendel aus mehr als einem Wärmetauscherrohr besteht, beispielsweise aus zweien, welche im Wesentlichen parallel, hin zu einer Wendelform, umgeformt sind. Bei einem solchen Ausführungsbeispiel wären beide Wärmetauscherrohre dann von demselben offenporigen Materialkörper umgeben.

Grundsätzlich kann also festgestellt werden, dass der Wärmetauscher mehr als ein Wärmetauscherrohr aufweisen kann, welche insbesondere in dasselbe Material eingebettet sind.

Das Wärmetauscherrohr kann dabei typischerweise aus einem Metall, insbesondere Kupfer, Aluminium, Edelstahl, Titan oder ähnlichem, bestehen, alternativ aus Kunststoff oder einem anderen geeigneten Material. Sofern dieses Rippen aufweist, können diese aus demselben oder einem anderen (insbesondere Metall-) Material bestehen

Dem offenporigen Materialkörper können insbesondere Anschlüsse für das zweite Medium zugeordnet sein. So kann an einem Körperende ein Einlass für das zweite Medium (insbesondere Kühlmedium) vorgesehen sein und im Bereich des anderen Endes des Körpers ein Auslass für dieses Medium.

Bei dem ersten und/oder zweiten Medium handelt es sich vorteilhafterweise um ein Fluid, insbesondere jeweils um ein Gas oder eine Flüssigkeit.

Gemäß einer besonders vorteilhaften Ausgestaltung der Erfindung weist der Wärmetauscher eine Kammer auf, in welcher das Wärmetauscherrohr angeordnet ist. Insbesondere ist in der Kammer zumindest der aktive Teil des Wärmetauscherrohres angeordnet. Mit aktiver Teil des Wärmetauscherrohres ist derjenige Teil gemeint, welcher von dem offenporigen Material umgeben ist und typischerweise von diesem bzw. dem zweiten Medium gekühlt wird.

Wie oben bereits dargelegt, kann es sich bei der Kammer des Wärmetauschers um die Herstellungsform für den Körper aus offenporigem Material handeln, in welche das Grundmaterial bei der Herstellung des Wärmetauschers eingebracht wird, mithin also eine Form, Kokille oder ähnliches.

In diesem Sinne kann die Kammer insbesondere ein Deckelelement (oder Verschluss) aufweisen, welches insbesondere nach Einbringen des Materials geschlossen wurde.

Bei der Kammer kann es sich alternativ um eine von einer (Guss-)Form abweichende Kammer handeln, beispielsweise eine Kammer, in die das Wärmetauscherrohr samt dieses umgebende, offenporige Material eingebracht wird, nachdem es aus der Form entnommen wurde.

Die Kammer weist typischerweise mindestens einen oder mehrere Anschlüsse für das zweite Medium auf, gegebenenfalls auch Anschlüsse für das erste Medium (jedenfalls sofern diese nicht von dem Wärmetauscherrohr selbst bereitgestellt werden, beispielsweise sofern dieses aus der Kammer herausragt).

Des Weiteren ist es, wie ebenfalls oben bereits angedeutet, möglich, dass die Kammer von der Außenwand des Körpers (aus offenporigem Material) bereitgestellt wird, jedenfalls sofern dieser an der Außenseite versiegelt ist oder ähnliches.

Vorzugsweise ist vorgesehen, dass die Kammer mit dem offenporigen Material gefüllt ist. Insbesondere kann die Kammer vollständig mit dem offenporigen Material gefüllt sein. Alternativ kann die Kammer auch nur mit dem Material angefüllt oder teilaufgefüllt sein.

Gemäß einer weiteren, sehr vorteilhaften Ausgestaltung der Erfindung weist die Kammer einen sich jedenfalls abschnittsweise (vorzugsweise durchgehend) verjüngenden Querschnitt auf.

Bei einer derartigen Kammer kann man beispielsweise an eine kegelstumpfförmige Kammer denken, wobei hierbei im mathematischen Sinne als Kegel nicht nur eine geometrische Form mit einer Kreisflächenbasis, sondern auch jede geometrische Form mit einer Grundfläche aus einem Vieleck zu verstehen ist, beispielsweise eine Pyramide bzw. ein Pyramidenstumpf. All diese Formen haben gemein, dass sich der Querschnitt verjüngt.

Eine derartige, sich verjüngende Querschnittsform weist den Vorteil auf, dass bei entsprechender, gegenläufiger Leitung des zweiten Mediums durch eine solche Kammer hindurch, dass zweite Medium expandieren kann, wodurch es zu weiteren Kühleffekten kommt. Mit anderen Worten kann das zweite Medium, welches insbesondere als Kühlmittel ausgestaltet ist, beim Durchlaufen des offenporigen Materialkörpers aufgrund einer Expansion grundsätzlich (weiter) abkühlen.

Demnach sollte sich besagter Querschnitt entgegen der Hauptströmungsrichtung des zweiten Mediums (also des Kühlmittels) verjüngen, damit sich der Querschnitt in Hauptströmungsrichtung des zweiten Mediums verbreitert und das Medium somit expandieren und abkühlen kann. Dies führt zur kontrollierten Veränderung von Druck und Temperatur. Das verjüngen des Querschnitts stellt dabei nur eine Variante dar, andere Ausführungsformen sind genauso denkbar.

Üblicherweise wird die Kammer aber einen geraden (sich nicht verjüngenden) Querschnitt aufweisen.

Vorteilhafterweise besteht das offenporige Material aus Metall. Insbesondere kann es sich dabei um Aluminium oder eine Aluminiumlegierung handeln, welches während des Herstellungsverfahrens des Wärmetauschers mit offenen Poren versehen wird. Vorstellbar ist also ein offenporiger Aluminiumschaum oder ein Aluminiumgusskörper, welcher mit offenen Poren versehen ist.

Gemäß einer besonders vorteilhaften Ausgestaltung der Erfindung kann das Wärmetauscherrohr als Wendel ausgestaltet sein. Dies ermöglicht eine besonders kompakte Bauweise des Wärmetauschers. Grundsätzlich sind aber auch andere Formen, wie oben bereits angedeutet, einsetzbar.

Nach einer vorteilhaften Ausgestaltung der Erfindung ist das Wärmetauscherrohr als Rippenrohr ausgebildet. Die Rippen können beispielsweise an dem Rohr verschweißt sein oder aus diesem ausgewalzt sein oder ähnliches. Es kann sich um Rippen mit unterschiedlicher Steigung oder derselben Steigung handeln.

Die Rippen sind ebenfalls in das offenporige Material eingebettet.

Gemäß einem weiteren Aspekt der Erfindung betrifft diese ein Verfahren zur Herstellung eines Wärmetauschers. Wie oben bereits teilweise beschrieben, wird bei der Herstellung eines erfindungsgemäßen Wärmetauschers zunächst ein Wärmetauscherrohr bereitgestellt, welches in eine Form oder Kammer eingebracht wird. Anschließend wird Material in die Form bzw. Kammer eingebracht. Das Material kann, muss aber noch nicht, bereits im Herstellungszustand des Wärmetauschers offenporig sein.

Entscheidend ist, dass das Material in dem späteren Nutzzustand, also nach Herstellung des Wärmetauschers, offenporig ist.

Je nach Material kann dieses in die Kammer auf unterschiedliche Weise eingebracht werden. Besonders bevorzugt ist ein Druckgussverfahren. Alternativ kann das Material aber auch in die Kammer bzw. Form eingeschäumt, eingespritzt oder eingelassen werden oder ähnliches.

Besonders vorteilhafterweise ist bei dem erfindungsgemäßen Verfahren vorgesehen, dass das in die Kammer einzubringende bzw. eingebrachte Material mit Partikeln versetzt ist oder wird.

Bei den Partikeln kann es sich beispielsweise um ein Granulat oder Kristalle oder ähnliches handeln, welche nach dem Einbringen in die Kammer aus dem Material entfernt werden.

Beispielsweise könnte ein Salzgranulat dem Material beigesetzt sein, welches nach dem Einbringen des Materials in die Form oder Kammer aus dem Material ausgeschwemmt wird. Grundsätzlich sind aber auch andere Möglichkeiten der Entfernung entsprechender Partikel vorstellbar, wie beispielsweise eine Erhitzung oder eine Selbstauflösung der Partikel mit der Zeit oder ähnliches.

Durch den Zusatz und das späteren Entfernen derartiger Partikel kann insbesondere eine Offenporigkeit des Materials erreicht werden, selbst bei eigentlich nicht offenporigen Materialien, wie Metallschmelzen oder sogar bei geschlossen-porigem Materialien wie beispielsweise Schäumen.

Mithin kann durch derartige Partikel eine grundsätzliche Porigkeit des Materials erreicht werden (also die eigentlichen Poren entstehen). Alternativ oder zusätzlich können durch derartige Partikel aber auch die Verbindungen oder Kanäle zwischen den Poren hergestellt werden. Andererseits könnten diese aber wiederum auch bei einem Gussvorgang (automatisch) entstehen.

Für den Fall, dass die Partikel nicht die Poren selber durch ihre Entfernung ausbilden, sondern lediglich Verbindungen, können die Poren selber auf jede bekannte Art erstellt werden, beispielsweise durch die Zugabe von Gasen oder Flüssigkeiten oder ähnlichem zu dem Ausgangsmaterial.

Die Partikel können dem Ausgangsmaterial vor oder nach Eingabe in die Kammer/Form beigesetzt werden oder besonders bevorzugt sogar vor dem Material in die Kammer eingegeben werden.

Gemäß einem weiteren Aspekt der Erfindung betrifft diese ein System zum Betanken eines Fahrzeuges mit einem Gas, insbesondere Wasserstoff oder Autogas. Derartige Systeme können insbesondere Zapfsäulen umfassen oder als solche ausgebildet sein.

An dieser Stelle sei angemerkt, dass die beschriebenen Tanksysteme und Verfahren ein jedes geeignetes Gas, wie Wasserstoff, Autogas, LNG, LPG oder synthetische Gase betreffen können. Nachfolgend wird dabei teilweise im speziellen von Wasserstoff die Rede sein. Anstelle von Wasserstoff sollen aber auch alle anderen zum Betanken geeigneten Gase, insbesondere die genannten, als mitoffenbart gelten.

Insbesondere umfasst ein derartiges System ein Zapfventil, durch welches der Wasserstoff in das Fahrzeug bzw. in den Tank des Fahrzeuges eingeleitet werden kann.

Wie bereits beschrieben, ist es aber notwendig, den Wasserstoff vor der Abgabe in den Tank in der Temperatur zu reduzieren, diesen mithin abzukühlen, da der Betankungsvorgang mit einer gewissen Komprimierung und somit Erwärmung verbunden ist. Der Kühlvorgang erfolgt also, um diese Erwärmung auszugleichen.

Für diesen Kühlvorgang wird ein erfindungsgemäßer Wärmetauscher, wie er oben hinreichend beschrieben wurde, genutzt.

Dieser kann insbesondere in die Zapfsäule integriert sein. Insbesondere kann er dem Zapfventil und/oder einem diesem zugeordneten Abgabeschlauch unmittelbar vorgeschaltet sein.

Ein derartiges Zapfventil kann auch als Pistole bezeichenbar oder Bestandteil dieser sein, welche insbesondere gemeinsam mit einem Zapfschlauch Bestandteil des Systems sein kann.

Gemäß einem letzten Aspekt der Erfindung betrifft die Erfindung ein Verfahren zum Betanken eines Fahrzeuges mit Gas, insbesondere Wasserstoff, gemäß welchem Wasserstoff von einem Wasserstoffvorrat zu einem Zapfventil geleitet wird, welches mit dem Fahrzeug kooperieren kann.

Insbesondere kann das Zapfventil mit dem Tank des Fahrzeuges kooperieren und es kann insbesondere an einem Zapfschlauch angeordnet sein.

Der Wasserstoff wird dabei zwecks Kühlung durch einen dem Wasserstoffvorrat und dem Zapfventil (sowie dem Zapfschlauch) zwischengeschalteten Wärmetauscher geleitet.

Dieser ist insbesondere oberirdisch angeordnet, weiter vorzugsweise in einer Zapfsäule.

Die Besonderheit gemäß diesem Aspekt besteht darin, dass der Wasserstoff durch ein Wärmeleitrohr des Wärmetauschers geleitet und dabei gekühlt wird.

So kann die Temperatur des Wasserstoffes auf diese Weise um mindestens 30°C, weiter vorteilhafterweise um bis zu 150°C gesenkt werden.

Lediglich beispielsweise kann die Temperatur des Wasserstoffes von etwa zwischen 0°C bis 85°C auf etwa -40°C bis -60°C gesenkt werden. Das Kühlmittel, welches hierzu verwendet wird (also das zweite Medium im Sinne der vorliegenden Anmeldung) kann beispielsweise eine Temperatur von -50°C aufweisen.

Im eingangs beschriebenen Stand der Technik erfolgt die Kühlung in einem sehr teuren Plattenwärmetauscher.

Ein derartiger Plattenwärmetauscher kann erfindungsgemäß durch einen Wärmetauscher mit Wärmeleitrohr ersetzt werden.

Auf diese Weise lässt sich insbesondere eine Anpassung an eine typischerweise im Durchschnitt benötigte Wasserstoffmenge erreichen.

Für eine erwartete geringere Anzahl an Zapfvorgängen hat sich dieses in der Regel nicht gelohnt.

Das erfindungsgemäße Verfahren, bei welchem der Wasserstoff durch ein Wärmeleitrohr des Wärmetauschers geleitet und dabei gekühlt wird, ermöglicht nun aber eine erhebliche Kostenreduktion und senkt die Hemmschwelle zur Installation eines entsprechenden Systems signifikant.

Dabei hat die Anmelderin herausgefunden, dass entgegen des Vorurteils, dass für das Kühlen von Wasserstoff ein Plattenwärmetauscher notwendig ist, eine solche Kühlung tatsächlich auch mit einem Wärmeleitrohr, durch welches der Wasserstoff geleitet wird, möglich ist.

Besonders vorteilhafterweise handelt es sich bei dem im besagten Verfahren eingesetzten Wärmetauscher um einen voranstehend beschriebenen Wärmetauscher, bei welchem der Bereich um das Wärmetauscherrohr von einem offenporigen Material bereitgestellt oder ausgebildet wird.

Alle diesbezüglichen Ausführungen sollen auch für das soeben beschriebene erfindungsgemäße Verfahren (und auch das davor beschriebene Verfahren und System) analog gelten. Diese Vorteile und Merkmale werden an dieser Stelle lediglich aus Gründen der Lesbarkeit und der Ökonomie nicht noch einmal wiederholt.

Weitere vorteilhafte Ausgestaltungen der Erfindung ergeben sich aus den nicht zitierten Unteransprüchen sowie aus der nachfolgenden Beschreibung der in den Figuren dargestellten Ausführungsbeispiele. Darin zeigen:
- Fig. 1: eine sehr schematische Ansicht einer Wasserstoff-Tankstelle mit einem neben einer Wasserstoff-Zapfsäule parkenden Pkw, unter gestrichelter Andeutung eines erfindungsgemäßen Wärmetauschers und gestrichpunkteter Andeutung eines Aluminiumblocks des Standes der Technik,
- Fig. 2: eine sehr schematische, isometrische Schrägansicht eines ersten Ausführungsbeispiels eines erfindungsgemäßen Wärmetauschers,
- Fig. 3: eine sehr schematische Schnittansicht des Wärmetauschers gemäß Fig. 2, etwa entlang der Schnittlinie III-III in Fig. 2,
- Fig. 4: in einer Ansicht, etwa gemäß Fig. 2, aber um 90° versetzt, ein weiteres Ausführungsbeispiel eines Wärmetauschers mit einer sich verjüngenden Kammer,
- Fig. 5: in einer sehr schematischen Ansicht ein Schnitt durch den Wärmetauscher gemäß Fig. 4, etwa entlang der Schnittlinie V-V in Fig. 4,
- Fig. 6: ein alternatives Ausführungsbeispiel eines Wärmetauscherrohres eines erfindungsgemäßen Wärmetauschers in einer schematischen, isometrischen Schrägansicht,
- Fig. 7: ein weiteres Ausführungsbeispiel eines erfindungsgemäßen Wärmetauschers mit einem Wärmetauscherrohr gemäß Fig. 6, in einer sehr schematischen, aufgebrochenen bzw. abgeschnittenen Darstellung,
- Fig. 8: in einer sehr schematischen Darstellung der Herstellungsprozess eines erfindungsgemäßen Wärmetauschers, insbesondere gemäß Fig. 7,
- Fig. 9: in einer Ansicht gemäß Fig. 7, der fertige Wärmetauscher gemäß Fig.8, bei geschlossener Kammer, und
- Fig. 10: ein sehr schematischer Ausschnitt aus einem Stück des offenporigen Materials, beispielsweise gemäß Fenster X in Fig. 9.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halberauch soweit unterschiedliche Ausführungsbeispiele betroffen sindgleiche oder vergleichbare Teile oder Elemente oder Bereiche mit gleichen Bezugszeichen, teilweise unter Hinzufügung kleiner Buchstaben, Zahlen und/oder Apostrophen, bezeichnet. Gleiches gilt für die der Figurenbeschreibung nachfolgenden Ansprüche.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mitumfasst.

Alle offenbarten Merkmale sind für sich erfindungswesentlich. In die Offenbarung der Anmeldung wird hiermit auch der Offenbarungsinhalt der gegebenenfalls zugehörigen Prioritätsunterlagen (Abschrift der Voranmeldung) sowie der gegebenenfalls zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

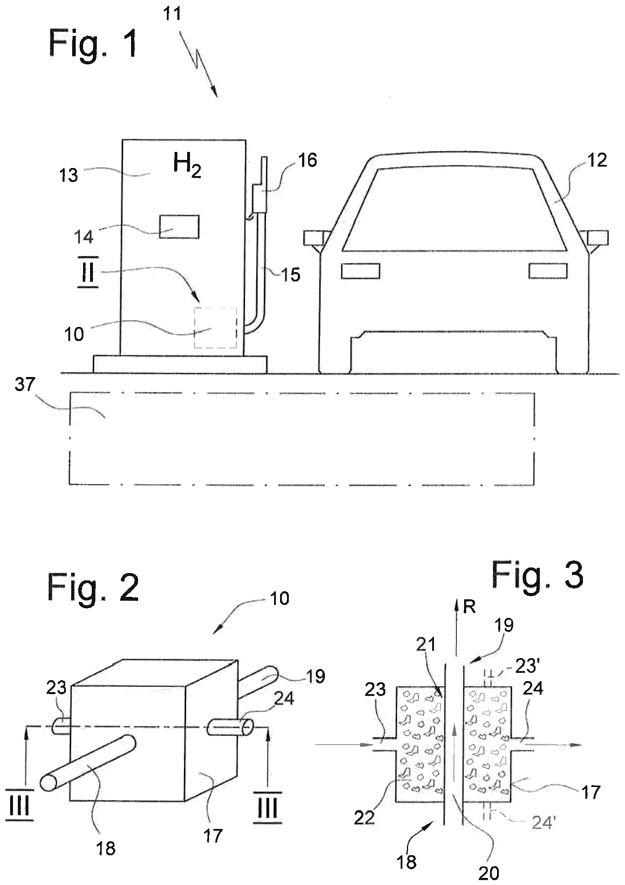

Fig. 1 zeigt zunächst ein erfindungsgemäßes System 11 zum Betanken eines Fahrzeuges 12 mit Wasserstoff.

Das System 11 ist exemplarisch als Zapfsäule 13 ausgebildet, welche neben einem Display 14 und einem, über einen Schlauch 15 mit dem Grundkörper der Zapfsäule 13 verbundenen, Zapfventil 16 (welches auch als Kupplung bezeichenbar ist), insbesondere einen in Fig. 1 gestrichelt dargestellten, erfindungsgemäßen Wärmetauscher 10 aufweist.

Der Wärmetauscher 10 ist dabei dem Schlauch 15 bzw. Zapfventil 16 (unmittelbar) vorgeschaltet und einem in Fig. 1 nicht dargestellten Wasserstoffvorrat (welcher beispielsweise in die Zapfsäule 13 integriert sein kann oder separat von dieser angeordnet sein kann), vorgeschaltet.

Mithin ist der Wärmetauscher 10 dem Wasserstoffvorrat und dem Zapfventil 16 zwischengeschaltet.

Um das Fahrzeug 12 innerhalb einer kurzen Zeitspanne von typischerweise weniger als 10 Minuten betanken zu können, ist es notwendig, die bei dem Verdichtungsprozess während des Betankens auftretenden hohen Temperaturen zu egalisieren und die Temperatur des Wasserstoffes in einem vorgeschalten Kühlprozess auf etwa -40°C bis-60°C zu reduzieren. Genau hierzu dient der erfindungsgemäße Wärmetauscher 10, durch welchen der zum Fahrzeug 12 geleitete Wasserstoff hindurchströmt, wobei er gekühlt wird.

In Fig. 1 ist ein in der Beschreibungseinleitung genannter Aluminiumblock 37 des Standes der Technik gestrichpunktet dargestellt. Ein solcher wird bei dem Einsatz eines erfindungsgemäßen Wärmetauschers 10 aber gerade nicht mehr benötigt. Fig. 1 soll dabei insbesondere den Aufwand verdeutlichen, welcher gemäß dem Stand der Technik teilweise noch betrieben werden muss.

Die Besonderheit des Wärmetauschers 10 gemäß Fig. 1 besteht, wie in Fig. 1 jedoch noch nicht dargestellt, insbesondere darin, dass der Wasserstoff durch ein Wärmetauscherrohr des Wärmetauschers 10 geleitet und hierbei gekühlt wird.

Ein sehr aufwendiges Herstellungsverfahren von speziellen Plattenwärmetauschern, wie eingangs zum Stand der Technik ebenfalls beschrieben, kann daher entfallen.

Fig. 2 zeigt dazu sehr exemplarisch, in einer sehr schematischen Außen-Schrägansicht, ein erstes Ausführungsbeispiel eines erfindungsgemäßen Wärmetauschers, von welchem in dieser Figur aber im Wesentlichen lediglich eine Kammer 17 (auch als Gehäuse bezeichenbar) erkennbar ist. Die Kammer 17 weist insbesondere zwei Anschlüsse 18 und 19 (einen Einlauf und einen Auslauf) für Wasserstoff auf. Die Anschlüsse für ein Kühlmittel sind in Fig. 2 mit 23 und 24 bezeichnet.

Entscheidend ist nun Fig. 3, welche einen Querschnitt durch den Wärmetauscher 10 gemäß Fig. 2 darstellt, etwa entlang der Schnittlinie III-III in Fig. 2.

Ausweislich Fig. 3 ist das Wärmetauscherrohr 20 rein exemplarisch als Glattrohr (also ohne Rippen) ausgebildet, welches eine im Wesentlichen lineare, stangenartige Form aufweist. Dies ist lediglich beispielhaft zu verstehen und soll den Aspekt der Erfindung gemäß Hauptanspruch verdeutlichen.

So ist in Fig. 3 nämlich erkennbar, dass der Bereich 21 um das Wärmetauscherrohr 20 (innerhalb der Kammer 17) von einem offenporigen Material 22 umgeben ist. In dem dargestellten Ausführungsbeispiel füllt das offenporige Material 22 insbesondere die gesamte Kammer 17 aus.

Bei dem offenporigen Material 22 kann es sich beispielsweise um offenporiges Aluminium oder ein anderes geeignetes, eingangs genanntes, Material handeln.

Entscheidend ist hierbei, dass das Material 22 eine gewisse Permeabilität aufweist, also eine Offenporigkeit in dem Sinne, dass die einzelnen Poren in dem Material 22, welche in Fig. 3 angedeutet sind, im Wesentlichen miteinander verbunden sind. Dies sorgt dafür, dass ein, über den in Fig. 3 dargestellten Anschluss 23, zugeführtes Kühlmittel das offenporige Material 22 (welches als fester Körper vorliegt) bezüglich Fig. 3 von links nach recht, also vom Einlass/Anschluss 23 hin zu einem Auslass/Anschluss 24, durchströmen kann oder über die alternativen (oder zusätzlichen), gestrichelten Anschlüsse 23 und 24 von oben nach unten (bzw. umgekehrt). Das Kühlmedium kühlt dabei insbesondere das offenporige Material 22 (bzw. dessen Körper) und auf diese Weise auch das Wärmetauscherrohr 20 bzw. den in diesem geleiteten Wasserstoff, nach Art eines Wärmetauschers.

Zu Fig. 3 sei abschließend angemerkt, dass diese verdeutlicht, dass das Kühlmedium exemplarisch im Wesentlichen quer zur Hauptströmungsrichtung R des Wasserstoffes (durch die Kammer 17) geleitet wird (oder über die alternativen, gestrichelt dargestellten Anschlüsse in oder entgegen der Hauptströmungsrichtung R).

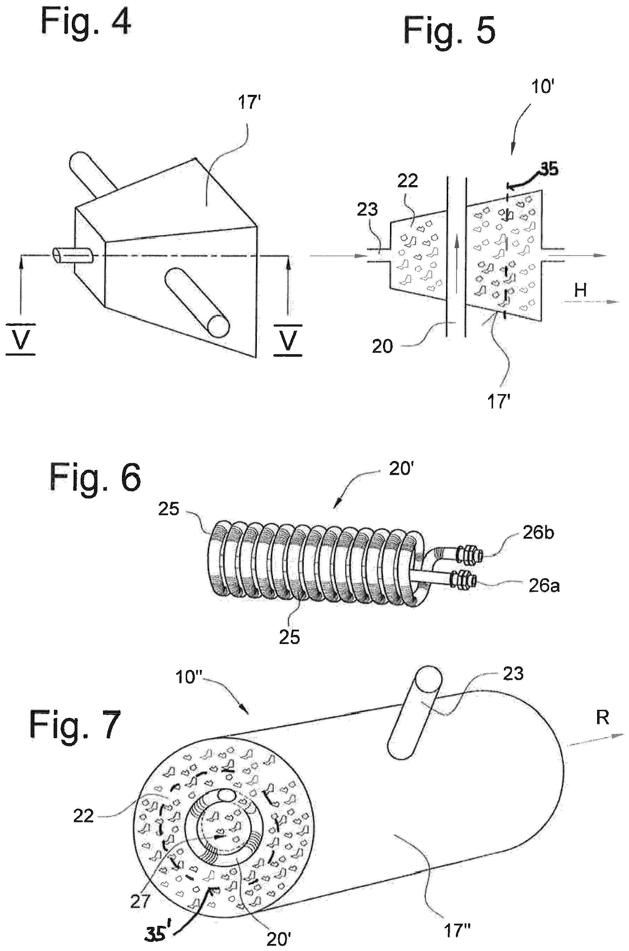

Die Figuren 4 und 5 zeigen sodann ein zweites Ausführungsbeispiel eines erfindungsgemäßen Wärmetauschers 10', welches im Vergleich zum Ausführungsbeispiel gemäß den Figuren 2 und 3 lediglich in einem Aspekt abgeändert ist: So ist die Kammer 17' in diesem Ausführungsbeispiel nicht quaderförmig ausgebildet, sondern pyramidenstumpfförmig.

Dies führt, was insbesondere in der Schnittansicht gemäß Fig. 5 verdeutlicht wird, zu einer Verjüngung der Kammer 17' entgegen der Hauptströmungsrichtung H des Kühlmediums. Mithin verbreitert sich die Kammer 17' in Hauptströmungsrichtung H des Kühlmediums.

Eine solche Ausgestaltung der Kammer 17' bzw. des Körpers des offenporigen Materials 22 kann dabei zu einem zusätzlichen Kühleffekt führen: So kann das Kühlmedium den Wärmetauscher 10' über den Einlass 23 betreten und dann aufgrund der sich verbreiternden Querschnittsform der Kammer 17' in Hauptströmungsrichtung H des Kühlmediums expandieren. Diese Expansion führt bei Gasen typischerweise zu einer weiteren Abkühlung der Umgebung (da das Gas seinen Aggregatzustand verändern bzw. verdampfen kann, was zu Verdampfungskälte führt), was das offenporige Material 22 (und somit den Wasserstoff) unterstützend abkühlen kann.

Es sind aber auch Fälle denkbar, bei welchen sich das Material 22 nicht zu sehr abkühlen darf (lediglich beispielsweise bei einer sich verjüngenden Querschnittsform der Kammer). Für derartige Fälle zeigt Fig. 5 schematisch einen in das Material 22 eingebetteten oder eingegossenen Heizdraht 35. Dieser ist lediglich schematisch und somit gestrichelt dargestellt und kann jede beliebige Form aufweisen (beispielsweise gradlinig oder mäanderförmig oder wendelförmig). Er kann insbesondere mit einem elektrischen Anschluss versehen sein, um die Heizleistung bereitzustellen. Mit einem derartigen Heizdraht 35 kann insbesondere einem unerwünschten Einfrieren entgegengewirkt werden.

Fig. 6 zeigt dann exemplarisch ein Wärmetauscherrohr 20', welches nicht als Glattrohr ausgebildet ist (es sind nämlich - der Übersichtlichkeit halber nicht durchgehend - angedeutete Rippen 25 sichtbar) und welches auch nicht als lineares Rohr ausgebildet ist, sondern als Rohrwendel bzw. wendelförmig.

Ein derartiges Wärmetauscherrohr 20' hat dabei den Vorteil, dass mehr aktive Rohrstrecke auf einem geringeren Raum kompakt anordnenbar ist.

In alternativen Ausführungsbeispielen könnte es sich aber auch um ein Rohr in einer flachen, im Wesentlichen flächenhaften Harfen- oder Mäander-Form handeln oder um Rohrbündel.

Jedenfalls zeigt Fig. 6 exemplarisch zwei Ein- bzw. Ausgänge 26 für den Wasserstoff. Die Ein- und Ausgänge 26 zeigen dabei exemplarisch in dieselbe Richtung. Selbstverständlich könnten die Ein- und Ausgänge 26 auch in unterschiedliche Richtungen zeigen, insbesondere an anderen Enden der Wendel angeordnet sein.

Ein derartiges Wärmetauscherrohr 20' gemäß Fig. 6 ist exemplarisch in einem weiteren, in Fig. 7 dargestellten, Wärmetauscher 10" verbaut.

In diesem Ausführungsbeispiel ist die Kammer 17" lediglich exemplarisch, im Wesentlichen zylinderartig ausgeführt und das Wärmetauscherrohr 20' ist in diesem Ausführungsbeispiel im Wesentlichen koaxial, mittig ausgerichtet.

Auch gemäß diesem Ausführungsbeispiel des Wärmetauschers 10" ist das Wärmetauscherrohr 20' von offenporigem Material 22 umgeben. Das offenporige Material 22 füllt dabei insbesondere wieder die gesamte Kammer 17" aus, und erstreckt sich insbesondere auch in den Innenbereich 27 des wendelförmigen Wärmetauscherrohres 20'.

Fig. 7 stellt dabei eine abgebrochene, offene Schnittdarstellung dar, insbesondere da das offenporige Material 22 erkennbar ist, und die Kammer 17" typischerweise auch von vorne, also in der Sichtebene der Fig. 7, geschlossen wäre.

Ausgehend von Fig. 7 sei angemerkt, dass bei einer anderen, nicht dargestellten Ausführungsform, möglicherweise auch gar keine separate Kammer 17" vorgesehen sein müsste, sondern der Körper des offenporigen Materials 22 an seiner Außenseite beispielsweise beschichtet sein könnte oder ähnliches (so dass kein Kühlmittel austreten kann). Dies würde möglicherweise sogar eine Kammer entbehrlich machen.

Wie Fig. 5 zeigt auch Fig. 7 sehr schematisch einen Heizdraht 35', welcher in diesem Ausführungsbeispiel wendelförmig, koaxial zu dem Wärmetauscherrohr 20' in der Kammer 17" angeordnet ist.

Zu Fig. 7 sei abschließend noch angemerkt, dass die Ein- bzw. Auslässe 26 des Rohres 20" in dieser verdeckt sind, da sie in etwa nach hinten weg zeigen.

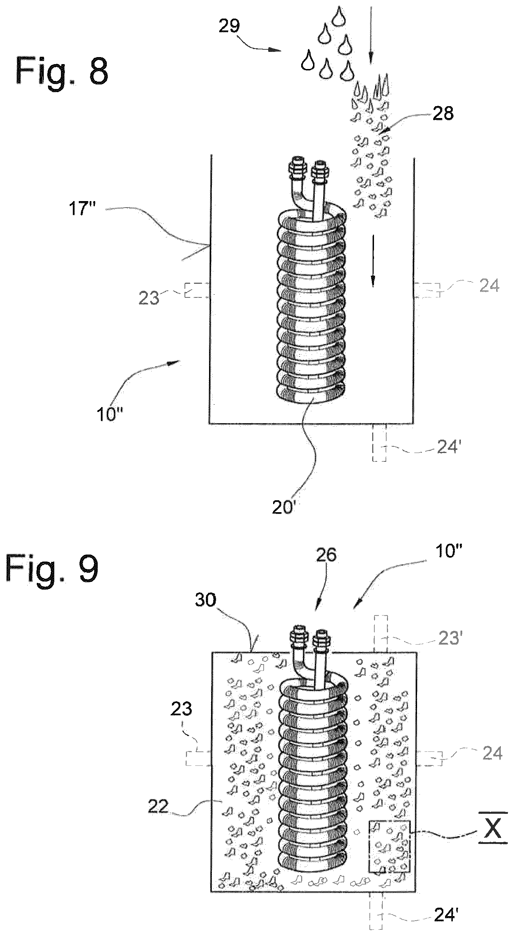

Den Herstellungsprozess eines entsprechenden Wärmetauschers 10" gemäß Fig. 7 soll die Figurenabfolge der Figuren 8 und 9 verdeutlichen: So zeigt Fig. 9 zunächst eine Form, welche insbesondere von der Kammer 17" bereitgestellt werden kann. In diese Form wird das Wärmetauscherrohr 20' zunächst eingebracht. Anschließend wird der Innenraum der Kammer 17" mit einem Granulat 28 aufgefüllt, welches in Fig. 8 lediglich exemplarisch durch einige wenige Granulatkörner angedeutet wird.

Anschließend wird in die Form 17" eine (Metall-)Schmelze 29 eingebracht, welche in Fig. 8 ebenfalls exemplarisch durch einige Schmelztropfen dargestellt ist. Die Schmelze 29 kann das Granulat 28 dabei innerhalb der Kammer 17" genauso umschließen wie das Wärmetauscherrohr 20'.

Nachdem die Schmelze 29 ausgehärtet ist, kann das Granulat 28, bei welchem es sich beispielsweise um (NaCl-)Salzgranulat handeln kann, ausgespült bzw. ausgewaschen werden, so dass in der dann entstehenden Materialstruktur Poren vorherrschen. Diese Poren werden demnach also durch das Granulat 28 als Platzhalter definiert. Kleinere Verbindungsporen können dabei insbesondere durch den Gießprozess der Schmelze 29 entstehen.

Lediglich der Vollständigkeit halber sei angemerkt, dass grundsätzlich aber auch andere Herstellungsarten möglich sind, dass beispielsweise ein Schaum eingebracht werden kann und das Granulat dann die Verbindungsporen definiert bzw. entstehen lässt.

Jedenfalls entsteht jeweils eine in Fig. 9 dargestellte Konfiguration mit dem festen, offenporigen Material 22.

Gegebenenfalls kann die Kammer 17" dann mit einem Deckel 30 oder Verschluss (welcher insbesondere die Anschlüsse 26 berücksichtigt) verschlossen werden. Dieser Deckel 30 kann dabei typischerweise sehr viel kleiner als in Fig. 9 dargestellt sein, insbesondere wenn es sich bei der Kammer 17" um eine Gussform handelt. Es kann sich demnach auch statt um einen Deckel um ein Verschlusselement 30 handeln.

Insbesondere können die Rohranschlüsse 26 durch besagten Deckel hindurchragen. Alternativ, aber nicht dargestellt, kann einer der Anschlüsse aber auch entgegengesetzt, bezüglich Fig. 9 am unteren Ende angeordnet sein und/oder in eine andere Richtung zeigen, beispielsweise durch den Boden der Kammer durchgeführt sein.

Auch ist es möglich (jedoch nicht dargestellt), dass die Gussform vollständig entfernt wird und das so entstandene Gebilde aus Material 22 und Wärmetauscherrohr 20' anschließend in eine separate Kammer eingebracht wird.

In jedem Fall entsteht aber eine offenporige Struktur.

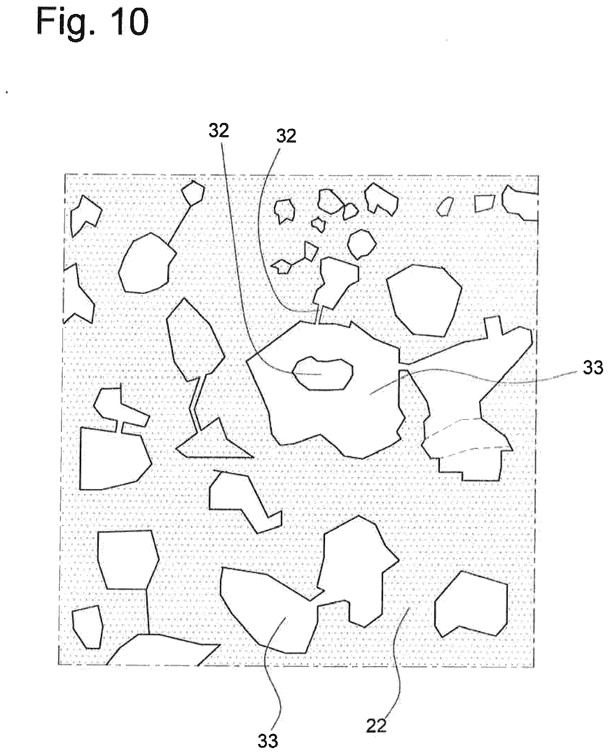

In dem dargestellten Ausführungsbeispiel handelt es sich exemplarisch um eine offenporige Aluminiumstruktur, welche in Fig. 10 noch einmal in einem vergrößerten Ausschnitt dargestellt ist.

Fig. 10 verdeutlicht hierbei insbesondere, dass in dem offenporigen Material 22 größere Poren 33 bestehen, welche durch das Granulat 28 definiert sind und durch dessen Entfernung entstehen. Kleinere Verbindungsporen 32 können typischerweise durch den Gießprozess entstehen (oder alternativ oder zusätzlich ebenfalls von Granulat einer anderen Korngröße oder ähnlichem bereitgestellt werden).

Entscheidend ist vorliegend, dass ein offenporiges Material 22 entsteht, welches derart permeabel ist, dass das Kühlmittel durch dieses offenporige Material 22 hindurchgeleitet werden kann.

Abschließend sei angemerkt, dass Fig. 8 und Fig. 9 einen in den Figuren 5 und 7 noch schematisch dargestellten Heizdraht 35 bzw. 35' der Übersichtlichkeit halber nicht zeigen. Dieser könnte in dem Ausführungsbeispiel entweder fortgelassen sein oder aber vorhanden sein (aber nicht dargestellt). Bei der Herstellung des Wärmetauschers gemäß Fig. 8 oder Fig. 9 kann der Heizdraht insbesondere vor dem Granulat 28 und/oder der Schmelze 29 in die Kammer 17" eingebracht werden oder aber - wohl praktikabler - nach Granulat 28 und/oder Schmelze 29 (also mithin als letztes Bauelement).

## Patentansprüche

1. Wärmetauscher (10, 10', 10"), umfassend ein Wärmetauscherrohr (20, 20') zum Leiten eines ersten Mediums in seinem Inneren, sowie mindestens einen Anschluss (23) für ein zweites Medium, **dadurch gekennzeichnet, dass** der Bereich (21) um das Wärmetauscherrohr (20, 20') von einem, insbesondere festen, offenporigen Material (22), vorzugsweise einem Körper aus einem solchen Material (22), bereitgestellt wird, in welches das zweite Medium insbesondere eintreten kann.

2. Wärmetauscher (10, 10', 10") nach Anspruch 1, **dadurch gekennzeichnet, dass** dieser eine Kammer (17, 17', 17") aufweist, in welcher das Wärmetauscherrohr (20, 20') angeordnet ist, wobei die Kammer (17, 17', 17"), insbesondere vollständig, mit dem offenporigen Material (22) gefüllt ist.

3. Wärmetauscher (10', 10") nach Anspruch 2, **dadurch gekennzeichnet, dass** die Kammer (17', 17") einen sich jedenfalls abschnittsweise, insbesondere entgegen der Hauptströmungsrichtung (H) des zweiten Mediums, verjüngenden Querschnitt, beispielsweise einen kegel(stumpf-)förmigen Querschnitt, aufweist.

4. Wärmetauscher (10, 10', 10") nach einem der voranstehenden Ansprüche, **dadurch gekennzeichnet, dass** das Material (22) aus Metall, insbesondere Aluminium, besteht.

5. Wärmetauscher (10") nach einem der voranstehenden Ansprüche, **dadurch gekennzeichnet, dass** das Wärmetauscherrohr (20') als Wendel und/oder als Rippenrohr und/oder als Koaxialrohr ausgebildet ist.

6. Wärmetauscher (10', 10") nach einem der voranstehenden Ansprüche, **dadurch gekennzeichnet, dass** in das Material (22) ein Heizdraht (35, 35') eingebettet ist.

7. Verfahren zur Herstellung eines Wärmetauschers (10, 10', 10") nach einem der vorangehenden Ansprüche, umfassend das Bereitstellen des Wärmetauscherrohres (20, 20') in einer Form oder Kammer (17, 17', 17"), **dadurch gekennzeichnet, dass** das, jedenfalls im Nutzzustand offenporige, Material (22) in die Form bzw. Kammer (17, 17', 17") eingebracht, insbesondere (druck-)gegossen, gespritzt oder eingeschäumt, wird.

8. Verfahren nach Anspruch 7, **dadurch gekennzeichnet, dass**, insbesondere zur Erzeugung einer Offenporigkeit, nach dem Einbringen des Materials Partikel (28), insbesondere Salzkristalle, aus dem Material (22) entfernt, beispielsweise herausgeschwemmt, werden.

9. System zum Betanken eines Fahrzeugs (12) mit einem Gas, vorzugsweise Wasserstoff, Autogas, LNG, LPG oder synthetischem Gas, insbesondere nach Art einer Zapfsäule (13), umfassend ein Zapfventil (16) sowie einen diesem vorgeschalteten Wärmetauscher (10, 10', 10") nach einem der Ansprüche 1 bis 6.

10. Verfahren zum Betanken eines Fahrzeugs (12) mit einem Gas, vorzugsweise Wasserstoff, Autogas, LNG, LPG oder synthetischem Gas, umfassend das Leiten von Gas von einem Gasvorrat zu einem Zapfventil (16), welches mit dem Fahrzeug (12) kooperieren kann, wobei das Gas zwecks Kühlung durch einen dem Gasvorrat und dem Zapfventil (16) zwischengeschalteten, insbesondere oberirdischen, Wärmetauscher (10, 10', 10") geleitet wird, **dadurch gekennzeichnet, dass** das Gas durch ein Wärmeleitrohr (20, 20') des Wärmetauschers (10, 10', 10") geleitet und dabei gekühlt wird.

11. Verfahren nach Anspruch 10, **dadurch gekennzeichnet, dass** es sich bei dem Wärmetauscher (10, 10', 10") um einen Wärmetauscher (10, 10', 10") nach einem der Ansprüche 1 bis 5 handelt.
